# FASCICULE DE BREVET EUROPEEN

(11) **EP 3 627 758 B1**
(45) Date de publication et mention de la délivrance du brevet: **09.06.2021**
(21) Numéro de dépôt: 19198766.8
(22) Date de dépôt: 20.09.2019
(51) Int. Cl.: H04L 9/08, G06N 10/00

(54) **METHODE DE COMPRESSION D'UN VECTEUR D'ETATS QUANTIQUES ET PROCEDE DE STOCKAGE D'UN VECTEUR D'ETATS QUANTIQUES**
VERFAHREN ZUM KOMPRIMIEREN EINES QUANTENZUSTANDSVEKTORS UND VERFAHREN ZUM SPEICHERN EINES QUANTENZUSTANDSVEKTORS
METHOD FOR COMPRESSING A QUANTUM STATE VECTOR AND METHOD FOR STORING A QUANTUM STATE VECTOR

(30) Priorité: 24.09.2018 FR 1858676
(43) Date de publication de la demande: 25.03.2020
(73) Titulaire: Bull SAS, 78340 Les Clayes-sous-Bois (FR)
(72) Inventeur: QUINTIN, Jean Noël, 92340 BOURG LA REINE (FR)
(74) Mandataire: Plasseraud IP

(56) Documents cités:
- MITSUMORI Y ET AL: "Experimental demonstration of quantum source coding", ARXIV.ORG, CORNELL UNIVERSITY LIBRARY, 201 OLIN LIBRARY CORNELL UNIVERSITY ITHACA, NY 14853, 4 avril 2003 (2003-04-04), XP080113095, DOI: 10.1103/PHYSREVLETT.91.217902
- JOHN PRESKILL: "Quantum Shannon Theory", ARXIV.ORG, CORNELL UNIVERSITY LIBRARY, 201 OLIN LIBRARY CORNELL UNIVERSITY ITHACA, NY 14853, 25 avril 2016 (2016-04-25), XP080970494,

## Description

### DOMAINE DE L'INVENTION

L'invention concerne une méthode de compression d'un vecteur d'états quantiques et un procédé de stockage d'un vecteur d'états quantiques comprenant une étape de compression d'un vecteur d'états quantiques.

### CONTEXTE DE L'INVENTION

Selon un premier art antérieur, il est connu une méthode de compression de données appelée communément « compression zip ». Cette méthode de compression permet de gagner de l'espace en mémoire. Toutefois, cette méthode ne connaît pas la nature des données compressées, limitant ainsi le taux de compression.

La présente invention vient améliorer la situation.

### RESUME DE L'INVENTION

L'invention porte sur un procédé de compression d'un vecteur d'états quantiques, en particulier lors d'une simulation d'un circuit quantique sur un calculateur quantique. Le procédé permet ainsi une optimisation très élevée de la place de stockage en mémoire en diminuant très fortement le temps d'exécution de la simulation.

La compression, à taux très important, consiste à conserver tels quels quelques états quantiques à forte probabilité et à compresser un très grand nombre d'états quantiques à faible probabilité.

Le plus souvent, l'état quantique recherché est obtenu directement et immédiatement et l'information perdue pour les états quantiques à faible probabilité n'a alors aucune incidence. En effet, dans la plupart des cas, l'état recherché est celui possédant une forte probabilité. La place en mémoire et le temps d'exécution sont alors très peu élevés.

Dans la minorité de cas restants, lorsque l'état recherché fait partie d'un agrégat d'états quantiques à faible probabilité, il est possible de reconstruire l'information perdue. La place de stockage en mémoire reste toujours très faible et la reconstruction est moins coûteuse en temps d'exécution qu'une simulation complète.

Pour éviter des agrégats comprenant un nombre très important d'états quantiques, il est possible de prévoir plusieurs sous-agrégats de taille réduite, de sorte que le temps d'exécution nécessaire à la reconstruction est alors encore moins important.

Il est en outre possible d'agréger les états quantiques contigus ayant la même probabilité. Cela a l'avantage de ne nécessiter aucune étape supplémentaire de reconstruction lorsque l'état recherché est situé dans un tel agrégat.

La méthode de compression permet donc de proposer un taux de compression particulièrement important en ayant, dans la grande majorité des cas, un recouvrement direct et immédiat de l'information recherchée ainsi qu'une perte d'information sans effet nuisible, et, dans les autres rares cas, la possibilité de récupérer complètement l'information perdue au prix d'un temps d'exécution limité et raisonnable.

Ainsi, le temps d'exécution est grandement amélioré puisque les états quantiques qui seront, dans la grand majorité des cas, utilisés par la suite sont directement accessibles. La place en mémoire est également optimisée par l'agrégation des états quantiques à faible probabilité.

A cette fin, la présente invention propose une méthode de compression d'un vecteur d'états quantiques, comprenant :
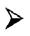 au moins une étape d'agrégation d'un groupe de plusieurs états contigus du vecteur en un regroupement d'états du vecteur,
   ∘ un paramètre représentatif de la probabilité de ce regroupement lui étant associé et correspondant à la somme des probabilités des états contigus agrégés dans ce regroupement,
   ∘ la probabilité de chaque état contigu agrégé étant inférieure à un seuil d'agrégation donné, et/ou la somme des probabilités des états contigus agrégés dans un regroupement étant inférieure à un autre seuil d'agrégation donné,
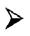 préférentiellement au moins une étape de conservation,
   ∘ un état du vecteur non agrégé dans un regroupement étant conservé, le paramètre représentatif de sa probabilité restant inchangé,
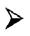 la méthode de compression comprenant :
   ∘ au moins plusieurs étapes d'agrégation de plusieurs groupes distincts de plusieurs états contigus du vecteur respectivement en plusieurs regroupements d'états du vecteur,
et/ou au moins une étape d'agrégation et au moins une étape de conservation.

Suivant des modes de réalisation préférés, l'invention comprend une ou plusieurs des caractéristiques suivantes qui peuvent être utilisées séparément ou en combinaison partielle entre elles ou en combinaison totale entre elles.

De préférence, la méthode comprend plusieurs étapes d'agrégation de plusieurs groupes distincts de plusieurs états contigus du vecteur respectivement en plusieurs regroupements d'états du vecteur et plusieurs étapes de conservation.

Ainsi, le taux de compression est encore optimisé et/ou le temps d'exécution, lorsque l'information perdue est récupérée, est encore diminué.

De préférence, la probabilité de chaque état contigu agrégé est inférieure à un seuil donné, et la somme des probabilités des états contigus agrégés dans un regroupement est inférieure à un autre seuil donné.

Ainsi, l'application d'une double condition de seuil permet de s'assurer que la probabilité associée à un agrégat ne dépasse jamais une valeur de probabilité trop importante qui augmenterait le temps d'exécution en cas de récupération d'information perdue. En effet, les états quantiques à faible probabilité sont agrégés car il y a très peu de chance que l'état quantique recherché se trouve dans cet agrégat. Si la somme des probabilités des états quantiques agrégés à faible probabilité était trop importante, le temps d'exécution nécessaire pour retrouver l'état quantique recherché parmi la pluralité d'états quantiques agrégés serait trop coûteux.

De préférence, la probabilité de chaque état conservé est supérieure à un seuil de conservation donné, et/ou la somme des probabilités des états conservés est supérieure à un autre seuil de conservation donné.

Cela permet de ne pas conserver d'état quantique dont la probabilité est trop faible. En effet, plus la probabilité d'un état conservé est forte, plus les chances que cet état quantique soit l'état quantique recherché sont élevées. De cette manière, le temps d'exécution est optimisé car l'état quantique est obtenu directement.

De préférence, la méthode comprend aussi une étape d'agrégation comprenant le regroupement de plusieurs états quantiques contigus dont toutes les probabilités sont identiques entre elles.

Dans ce cas, la méthode comprend avantageusement aussi :
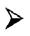 au moins une étape d'agrégation de plusieurs états contigus du vecteur en un regroupement d'états du vecteur,
   ∘ un paramètre représentatif de la probabilité de ce regroupement lui étant associé et correspondant à la somme des probabilités des états contigus agrégés dans ce regroupement,
   o les probabilités de tous les états contigus agrégés dans un même regroupement sont égales entre elles.

De cette manière, lorsque la probabilité de l'état recherché est égale à la probabilité des états contigus agrégés de même probabilité, aucune étape de reconstruction supplémentaire n'est nécessaire. Le temps d'exécution est alors diminué de manière considérable.

De préférence, ledit seuil d'agrégation donné et/ou l'autre dit seuil d'agrégation donné sont proportionnels à l'inverse du logarithme du nombre d'états quantiques.

Le coefficient pouvant être appliqué à l'inverse du logarithme du nombre d'états quantiques est de préférence compris entre 0.1 et 10. Cette valeur est choisie car, dans le cas de vecteurs comprenant un nombre d'états quantiques très important, cela permet d'agréger une très grande majorité d'états, en conservant des états quantiques à probabilité suffisamment élevée pour que le gain de place de stockage en mémoire ne soit pas réalisé au prix d'une trop forte augmentation de temps d'exécution, ce qui n'enlèverait pas son intérêt à la méthode de compression proposée par l'invention mais ce qui diminuerait son bénéfice. Notamment, ces seuils d'agrégation donnés permettent de s'assurer que, dans la très grande majorité des cas, les états quantiques conservés seront ceux recherchés.

De préférence, ledit seuil de conservation donné et/ou ledit autre seuil de conservation donné, est ou sont choisi(s) de manière à ce que le nombre de regroupements soit proportionnel au logarithme du nombre d'états quantiques, avec un coefficient de proportionnalité préférentiellement compris entre 0.1 et 10, et/ou ledit seuil de conservation donné et/ou ledit autre seuil de conservation donné, est ou sont choisi(s) de manière à ce que le nombre de regroupements reste inférieur à 1000, de préférence inférieur à 100.

Cela permet d'optimiser la réduction de la place de stockage en mémoire et du temps d'exécution. D'une part, la quantification idéale du nombre d'agrégats permet de s'assurer que les agrégats ne soient pas de taille trop importante, ce qui implique un certain nombre d'agrégats, de sorte que, en cas de récupération d'un état quantique dans un agrégat, le temps d'exécution reste très limité. D'autre part, il est important d'avoir un nombre suffisamment peu élevé d'agrégats pour que la place de leur stockage en mémoire reste très peu importante. Un nombre d'agrégat proportionnel au logarithme du nombre d'états quantiques remplit permet de réaliser un bon compromis entre ces deux contraintes.

De préférence, ledit seuil de conservation donné et/ou ledit autre seuil de conservation donné, est ou sont choisi(s) de manière à ce que le nombre de regroupements reste supérieur à 10.

Comme dit ci-dessus, les seuils de conservation et/ou d'agrégation sont choisis pour que la taille des agrégats ne soit pas trop élevée.

De préférence, le vecteur comprend au moins 2²⁰ états quantiques, de préférence supérieur à 2²⁵, encore plus de préférence supérieur à 2³⁰, avantageusement supérieur à 2³⁵.

La méthode de compression est appliquée à des vecteurs d'états quantiques de taille très importante. La méthode de compression selon l'invention permet de traiter ces types de vecteurs tout en optimisant la taille en mémoire ainsi que le temps d'exécution, ce qui est très intéressant lorsqu'un tel nombre de données est traité.

De préférence, au moins 90% des états quantiques du vecteur sont agrégés, de préférence au moins 99%, encore plus de préférence au moins 99.9%.

Le taux de compression obtenu par la méthode de compression est donc très important. Cela est particulièrement avantageux lorsque cette méthode est appliquée à des vecteurs de très grande taille. La place de stockage en mémoire après compression est effectivement optimisée de manière très importante.

De préférence, le ratio du nombre des états agrégés sur le nombre des états non agrégés est supérieur à 2²⁰, de préférence supérieur à 2²⁵, encore plus de préférence supérieur à 2³⁰, avantageusement supérieur à 2³⁵.

Le taux de compression obtenu par la méthode de compression est alors très élevé et donc très intéressant. Il apparaît que le taux de compression augmente de manière exponentielle avec la taille du vecteur quantique. La méthode de compression est donc particulièrement adaptée à des vecteurs d'états quantiques de taille très importante.

De préférence, une ou plusieurs étape(s) d'agrégation d'un ou de plusieurs groupe(s) de plusieurs états contigus du vecteur en un ou plusieurs regroupement(s) d'états du vecteur, est ou sont réalisées en affectant, audit regroupement, un paramètre représentatif de la probabilité de ce regroupement correspondant au complémentaire de la somme des probabilités des états préalablement déterminés, c'est-à-dire à la fois des états contigus agrégés et des états conservés.

Autrement dit, on effectue l'opération 1 - (pa + pc) avec pa la somme des probabilités des états agrégés, et pc la somme des probabilités des états conservés. Le vecteur d'états quantiques n'a pas besoin d'être entièrement calculé, c'est-à-dire qu'il n'est alors pas nécessaire de déterminer l'ensemble des états quantiques. Cela permet une réduction considérable de temps d'exécution.

De préférence, le nombre d'états du vecteur d'états quantiques est supérieur à 2²⁰, de préférence supérieur à 2²⁵, encore plus de préférence supérieur à 2³⁰, avantageusement supérieur à 2³⁵, et de préférence, le nombre de vecteurs d'états quantiques, auquel la méthode de compression selon l'une quelconque des revendications précédentes est appliquée, est supérieur à 2²⁰, de préférence supérieur à 2²⁵, encore plus de préférence supérieur à 2³⁰, avantageusement supérieur à 2³⁵.

La méthode de compression peut tout aussi bien s'appliquer à un nombre très important de vecteurs d'états quantiques comprenant chacun un nombre très important d'états quantiques. La méthode de compression s'y prête particulièrement bien puisque le taux de compression obtenu augmente de manière exponentielle à mesure que le nombre de vecteurs et/ou d'états quantiques augmente. La méthode de compression permet alors d'effectuer des simulations comprenant un très grand nombre de données sans que la mémoire ne soit saturée ou que le temps d'exécution ne devienne trop important.

La présente invention vise aussi un procédé de stockage d'un vecteur d'états quantiques comprenant :
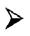 une étape d'identification des différents états du vecteur et des paramètres représentatifs des probabilités qui leur sont respectivement associées,
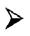 une étape de compression du vecteur utilisant la méthode de compression d'un vecteur d'états quantiques selon l'invention,
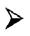 une étape de détermination de la probabilité de l'état quantique recherché,
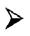 une étape d'association de l'état quantique recherché à la probabilité déterminée,
   ∘ soit simplement par extraction de l'état quantique recherché correspondant à la probabilité déterminée, lorsque l'état quantique recherché est conservé,
   ∘ soit par récupération de l'état quantique recherché correspondant à la probabilité déterminée, lorsque l'état quantique recherché est agrégé dans un regroupement, en recalculant cet état quantique recherché agrégé dans ce regroupement.

D'une part, le procédé selon l'invention permet donc de récupérer directement l'état quantique recherché lorsque celui-ci a été conservé suite à l'application de la méthode de compression. Le temps d'exécution est alors fortement diminué. Les autres états quantiques n'ont pas besoin d'être déterminés et la perte d'informations subie reste sans effet néfaste. Cela permet un gain très important de place de stockage en mémoire.

D'autre part, lorsque l'état quantique recherché fait partie d'un regroupement d'états quantiques, il est possible de récupérer cet état quantique. Il n'y a donc pas de perte d'informations irréversible. Le temps d'exécution nécessaire à la récupération reste négligeable en comparaison de la relance complète d'une simulation.

Suivant des modes de réalisation préférés, l'invention comprend une ou plusieurs des caractéristiques suivantes qui peuvent être utilisées séparément ou en combinaison partielle entre elles ou en combinaison totale entre elles.

De préférence, le vecteur d'état quantique recherché est retourné en sortie d'un calculateur quantique.

Le procédé selon l'invention permet alors de récupérer l'état quantique recherché pour s'en servir par la suite, selon différentes applications.

De préférence, tout ou partie des états quantiques du regroupement contenant ledit état quantique recherché est ou sont recalculé(s), et aucun état quantique des autres regroupements ne contenant pas ledit état quantique recherché n'est recalculé.

L'étape de récupération d'un état quantique agrégé permet alors d'optimiser le temps d'exécution. En effet, la récupération est faite de manière optimisée, ciblant les états quantiques à recalculer et uniquement ceux-là. Le reste de l'information peut être perdue sans risque car elle n'est pas utile à la récupération de l'état quantique recherché. Cela optimise également la place de stockage en mémoire.

De préférence, les états quantiques du regroupement contenant ledit état quantique recherché sont successivement recalculés jusqu'à obtenir ledit état quantique recherché, ou les états quantiques du regroupement contenant ledit état quantique recherché sont tous recalculés en parallèle pour obtenir ledit état quantique recherché.

Deux méthodes de recalcul peuvent être utilisées. Ces deux méthodes peuvent avantageusement être choisies selon le type d'agrégat. Ainsi, pour un agrégat contenant une très grande quantité d'états quantiques, le calcul de chaque état quantique peut être fait en parallèle de manière à optimiser le temps d'exécution. Pour des agrégats comprenant moins d'états quantiques, le recalcul en série peut être effectué, de manière à réduire les ressources en calculs.

De préférence, la récupération recalcule cet état quantique recherché agrégé dans ce regroupement par application, à tout ou partie des états quantiques agrégés dans ce regroupement, d'une méthode de simulation partielle.

L'utilisation d'une méthode de simulation partielle permet de retourner un seul état quantique, celui-ci étant l'état quantique recherché. La méthode de simulation faible est exécutée seulement sur le regroupement dans lequel se trouve l'état quantique recherché, ce qui évite des calculs inutiles, coûteux en temps d'exécution.

De préférence, la méthode de simulation partielle est:
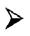 une méthode de Feynman, c'est-à-dire par une intégrale de chemin.

La présente invention vise aussi un procédé de stockage d'un vecteur d'états quantiques comprenant :
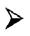 une étape d'identification des différents états du vecteur et des paramètres représentatifs des probabilités qui leur sont respectivement associées,
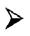 une étape de compression du vecteur utilisant la méthode de compression d'un vecteur d'états quantiques selon l'une quelconque des revendications précédentes,
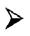 une étape de détermination de la probabilité de l'état quantique recherché,
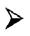 et l'une des deux étapes suivantes :
   ∘ Soit une étape d'association de l'état quantique recherché à la probabilité déterminée simplement par extraction de l'état quantique recherché correspondant à la probabilité déterminée, lorsque l'état quantique recherché est conservé,
   ∘ Soit une étape de recalcul de tous les états quantiques dudit vecteur d'états quantiques stocké.

Ce procédé de stockage est notamment particulièrement avantageux lorsque la probabilité des états quantiques conservés ou la somme des probabilités des états quantiques conservés est importante, notamment proche de 1. Ainsi, la plupart du temps le recalcul de tous les états quantiques n'a pas lieu et le procédé est peu coûteux en temps d'exécution.

La présente invention vise aussi un procédé de décodage de clé de cryptographie comprenant une méthode de compression d'un vecteur d'états quantiques selon l'invention ou un procédé de stockage d'un vecteur d'états quantiques selon l'invention.

Le procédé selon l'invention et/ou la méthode de compression selon l'invention trouve des applications techniques particulièrement intéressantes. Notamment, les procédés de décodage ont généralement un temps d'exécution très long, dû au nombre de données très importantes à traiter. La méthode et le procédé selon l'invention permettent de réduire ce temps d'exécution et de diminuer la place en mémoire des données à stocker. Il en résulter des procédés de décodage de clé de cryptographie très efficaces.

La présente invention vise aussi un procédé de recherche dans une base de données, d'un élément stocké dans cette base de données, selon un ou plusieurs critères de recherche dans cette base de données, comprenant une méthode de compression d'un vecteur d'états quantiques selon l'invention ou un procédé de stockage d'un vecteur d'états quantiques selon l'invention.

Le procédé selon l'invention et la méthode de compression selon l'invention trouvent une autre application technique particulièrement intéressante dans les procédés de recherche dans une base de données. Le procédé et la méthode selon l'invention sont particulièrement adaptés pour retrouver des informations très rapidement, sans nécessiter de conserver un nombre important de données en mémoire.

L'invention vise aussi un procédé de détermination de vecteurs d'états quantiques par un processeur quantique dans un ordinateur quantique comprenant une méthode de compression selon l'invention.

La détermination de vecteurs d'états quantiques est faite de manière très efficace puisque la place en mémoire nécessaire à la détermination est fortement optimisée du fait de la compression à taux très important des vecteurs d'états quantiques. De plus, le temps d'exécution est également fortement optimisé puisque les états quantiques sont, dans la très grande majorité des cas, déterminés directement, sans reconstruction.

L'invention vise aussi un procédé de simulation d'un circuit quantique comprenant une méthode de compression selon l'invention.

La simulation du circuit quantique est réalisée de manière rapide, grâce à la méthode de compression permettant de diminuer fortement le temps d'exécution. En effet, la méthode de compression permet de récupérer directement, dans la très grande majorité des cas, l'état quantique recherché puisque les états quantiques à forte probabilité sont conservés tels quels. De plus, la place en mémoire est également optimisée puisque les très nombreux états quantiques à faible probabilité sont agrégés entre eux en un nombre très limité de regroupements.

### BREVE DESCRIPTION DES DESSINS

La figure 1 est un ordinogramme représentant les principales étapes de la méthode de compression d'un vecteur d'états quantique selon un exemple de réalisation de l'invention.
La figure 2 est un ordinogramme représentant les principales étapes d'un procédé de stockage d'un vecteur d'états quantiques selon l'invention.
La figure 3 est un schéma illustrant une utilisation de la méthode de stockage et de compression d'un vecteur d'états quantiques selon un exemple de réalisation de l'invention.

### DESCRIPTION DETAILLEE DE L'INVENTION

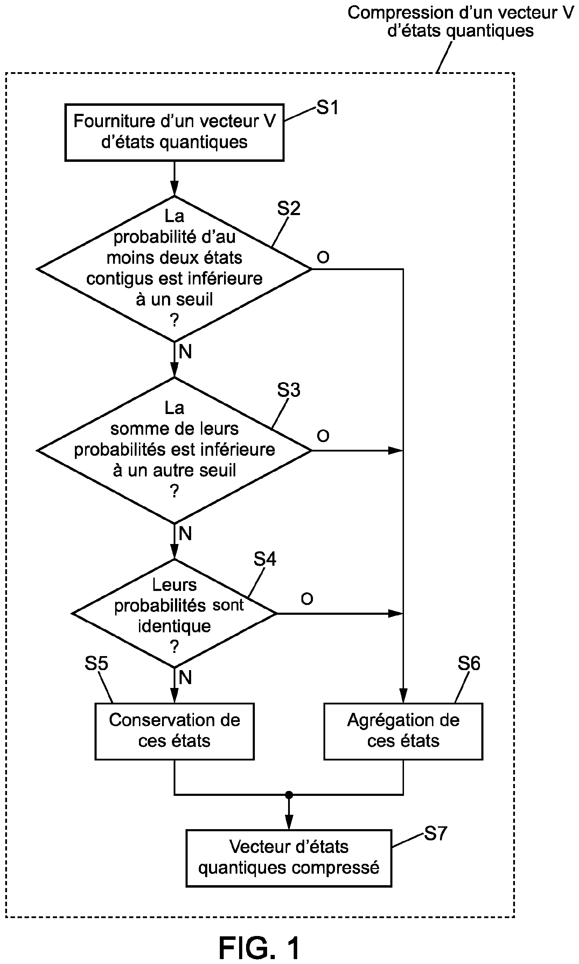

La figure 1 illustre un exemple de compression d'un vecteur V d'états quantiques V, selon un exemple de réalisation de l'invention. Un vecteur d'états quantiques est composé d'une pluralité de qbits, ayant comme état quantique 0 et 1.

A l'étape S1, on dispose d'un tel vecteur d'états quantiques V. Dans un mode de réalisation, ce vecteur d'états quantiques V peut comprendre 20 qbits, de préférence 30 qbits et encore plus préférentiellement, 36 qbits. Ainsi, le vecteur d'états quantiques V comprend au moins 2²⁰ états quantiques, de préférence supérieure à 2²⁵, encore plus de préférence supérieur à 2³⁰ et avantageusement supérieur à 2³⁵.

A chaque état quantique du vecteur est associée une probabilité, avec la somme de toutes les probabilités égale à 1. Plus précisément, le vecteur d'états quantiques comprend pour chaque état quantique possible une amplitude, l'amplitude au carré étant la probabilité associé à cet état quantique.

Cela représente donc une quantité de données très importante, notamment environ 16 Giga de données, jusqu'à plusieurs Tera de données.

L'état quantique de chaque qbit n'est pas connu. Un paramètre représentatif de sa probabilité d'apparition est associé à chaque état quantique du vecteur.

La méthode de compression comprend l'agrégation en un regroupement d'états de plusieurs états quantiques contigus, au moins deux, selon un critère choisi.

La méthode de comprend peut en outre comprendre la conservation d'au moins un état quantique, selon un critère choisi.

Notamment, comme illustré à l'étape S2, un premier critère comprend la détermination qu'au moins deux états quantiques contigus ont respectivement une probabilité inférieure à un premier seuil.

Ainsi, si le vecteur d'états quantiques V comprend n états quantiques, E, il est vérifié qu'un état quantique Ei comprend une probabilité Pi inférieure au premier seuil. Si un état quantique contigu, par exemple l'état quantique Ei-1 comprend également une probabilité Pi-1 inférieure au premier seuil, les deux états quantiques contigus Ei-1 et Ei sont agrégés en un regroupement de deux états quantiques. Un paramètre représentatif de la probabilité de ce regroupement Pr leur est attribué. Ce paramètre, c'est-à-dire la probabilité du regroupement Pr peut être la somme des probabilités Pi, Pi-1 des deux états quantique Ei, Ei-1 agrégés.

De la même manière, si l'état quantique Ei+1 comprend une probabilité Pi+1 inférieure au premier seuil, Ei+1 est agrégé aux deux états quantiques Ei-1, Ei pour former un regroupement de trois états quantiques, dont la probabilité Pr est égale à la somme des probabilités Pi-1, Pi, Pi+1.

L'agrégation de plusieurs états quantiques E contigus en un regroupement d'états quantiques est illustrée à l'étape S6.

Lorsqu'un état quantique Ej comprend une probabilité Pj supérieure au premier seuil, l'agrégation de plusieurs états quantiques contigus en un regroupement est arrêtée.

Toutefois, même lorsqu'un état quantique comprend une probabilité supérieure au premier seuil, d'autres états quantiques contigus peuvent être agrégés en un regroupement d'états quantiques selon l'étape S2. Ainsi, si les états quantiques Ej+1 et Ej+2 ont respectivement une probabilité inférieure au premier seuil, ils sont agrégés en un regroupement d'états quantiques.

Un deuxième critère d'agrégation, illustré à l'étape S3, peut également être appliqué. Par exemple, ce deuxième critère peut être appliqué aux états quantiques n'ayant pas été agrégés lors de l'étape S2.

Le deuxième critère comprend par exemple la détermination que la somme des probabilités d'au moins deux états quantiques contigus est inférieure à un deuxième seuil. Lorsque la somme des probabilités de deux états contigus est inférieure au deuxième seuil, ces deux états quantiques contigus sont agrégés en un regroupement d'états quantiques. Un paramètre représentatif de la probabilité du regroupement lui est associé. Ce paramètre est par exemple la somme des probabilités de chaque état quantique du regroupement.

Autrement dit, si la somme des probabilités Ps de deux états quantiques contigus Ej-1 de probabilité Pj-1 et Ej de probabilité Pj est inférieure à un deuxième seuil, soit Pj-1 + Pj inférieure au deuxième seuil, les deux états contigus Ej-1, Ej sont agrégés en un regroupement d'états quantiques à l'étape S6. La probabilité de ce regroupement Ps est égale à Pj-1 + Pⱼ.

Lorsque ni le premier, ni le deuxième critère ne sont remplis, un troisième critère peut être appliqué à l'étape S5.

Le troisième critère comprend la détermination qu'au moins deux états quantiques contigus comprennent la même probabilité.

Autrement dit, si au moins deux états quantiques contigus Ek, Ek+1, de probabilité respective Pk, Pk+1, ont leur probabilité égales, les deux états quantiques contigus Ek, Ek+1 sont agrégés en un regroupement d'états quantiques à l'étape S6. La probabilité de ce regroupement est la somme des probabilités Pk, Pk+1.

Lorsqu'un état quantique E ne répond pas à l'un de ces trois critères, cet état est conservé à l'étape S5. La probabilité de l'état quantique conservé ne change pas.

A l'étape S7, le vecteur d'états quantiques V compressé est obtenu.

Avantageusement, la méthode de compression comprend plusieurs étapes d'agrégation de plusieurs groupes distincts d'états quantiques en plusieurs regroupements d'états quantiques.

Avantageusement, la méthode de compression comprend également au moins une étape de conservation d'un état quantique.

De préférence, la méthode de compression comprend plusieurs étapes d'agrégation et plusieurs étapes de conservation.

La méthode de compression illustrée sur la figure 1 est un exemple de réalisation.

Selon un autre exemple, seul le premier critère (étape S2) est appliqué.

Selon un autre exemple, seul le deuxième critère (étape S3) est appliqué.

Selon un autre exemple, seul le troisième critère (étape S4) est appliqué.

Selon un autre exemple, seuls les premier et deuxième critères (étapes S2 et S3) sont appliqués.

Selon un autre exemple, les premier et deuxième critères sont cumulatifs. Autrement dit, pour qu'au moins deux états quantiques contigus soient agrégés en un regroupement d'états quantiques, leur probabilité respective doit être inférieure au premier seuil et la somme de leurs probabilités doit être inférieure au deuxième seuil.

Selon un autre exemple, seuls les premier et troisième critères (étapes S2 et S4) sont appliqués.

Selon un autre exemple, seuls les deuxième et troisième critères (étapes S3 et S4) sont appliqués.

Il est également entendu que la méthode de compression peut également être appliquée en utilisant d'autres critères. Par exemple, un premier seuil de conservation peut être défini. Dans cette variante de réalisation, les étapes S1 à S3 peuvent ne pas être mises en œuvre. Dans cette variante, il est détermine si un état quantique comprend une probabilité supérieure au premier seuil de conservation. Si c'est le cas, cet état quantique est conservé. Les états quantiques contigus comprenant une probabilité inférieure au seuil de conservation sont agrégés.

Selon une autre variante, tous les états quantiques, contigus ou non, comprenant une probabilité inférieure au premier seuil de conservation sont agrégés.

Selon une autre variante de réalisation, un deuxième seuil de conservation peut être défini. Selon cette variante, il est déterminé si la somme des probabilités d'états quantiques est supérieure au deuxième seuil de conservation. Lorsque c'est le cas, ces états quantiques sont conservés. Les états quantiques contigus comprenant une probabilité inférieure au seuil de conservation sont agrégés.

Selon une autre variante, tous les états quantiques, contigus ou non, comprenant une probabilité inférieure au deuxième seuil de conservation sont agrégés.

Un autre critère peut être défini, selon lequel les applications du premier seuil et du deuxième seuil de conservation sont cumulatives pour qu'un état quantique soit conservé. Ainsi, seuls les états quantiques comprenant une probabilité supérieure au premier seuil de conservation sont conservés. Dès lors que la somme de leur probabilité est supérieure au deuxième seuil de conservation, tous les états quantiques restant sont agrégés.

Selon une autre variante de réalisation, lorsqu'un ou plusieurs états quantiques sont manquants, la probabilité qui leur est associée est déduite des probabilités associées aux états quantiques agrégés ou conservés. En effet, la somme des probabilités associées à un état quantique ou à un regroupement d'états quantiques est égale à 1. Ainsi, la probabilité des états quantiques manquants est égale au complémentaire de la somme des probabilités connues. Autrement dit, la probabilité manquante est retrouvée en faisant l'opération 1 - (somme des probabilités connues).

Le nombre d'états quantiques du vecteur d'états quantiques étant très important, le premier et le deuxième seuil sont choisis de manière à réduire considérablement la taille du vecteur d'états quantiques. Toutefois, dans des applications du vecteur d'états quantiques, il peut être utile de conserver les états quantiques associés à une forte probabilité : ce sont ces états quantiques qui ont le plus de chance de devoir être récupérés après compression du vecteur d'états quantiques. Ainsi, le premier seuil et le deuxième seuil ne doivent pas être trop peu élevés.

Par exemple, le premier seuil et le deuxième seuil sont proportionnels à l'inverse du logarithme du nombre d'états quantiques. Autrement dit, si le vecteur d'états quantiques comprend n états quantiques, le premier seuil et le deuxième seront égaux à c/log(n), avec c un nombre réel, pouvant prendre une valeur différente pour le premier seuil et le deuxième seuil.

Notamment, c peut être choisi de sorte que le nombre de regroupements distincts d'états quantiques soit proportionnel au logarithme du nombre d'états quantiques du vecteur d'états quantiques. Autrement dit, le nombre de regroupements distincts peut être égal à d.log(n), avec d un nombre réel préférentiellement compris entre 0.1 et 10.

En variante, c peut être choisi de sorte que le nombre de regroupements reste inférieur à 10 000, de préférence à 1000 et de préférence inférieur à 100. Ces ordres de grandeurs dépendent également de la taille du vecteur d'états quantiques, et donc du nombre d'états quantiques. Le nombre réel c peut également être choisi de sorte que le nombre de regroupements soit toujours supérieur à 10.

Ainsi, selon ces réalisations, entre 90% et 99.9% des états quantiques du vecteur d'états quantiques sont agrégés.

Autrement dit, et au vu du nombre très importants d'états quantiques du vecteur quantique, la méthode de compression selon l'exemple de réalisation permet d'obtenir un ratio du nombre d'états agrégés sur le nombre d'états conservés compris entre 2²⁰ et 2³⁵.

La méthode de compression est particulièrement avantageuse car elle peut être appliquée simultanément à un nombre de vecteur d'états quantiques, comprenant chacun au moins 2²⁰ états quantiques, compris entre 2²⁰ et 2³⁵.

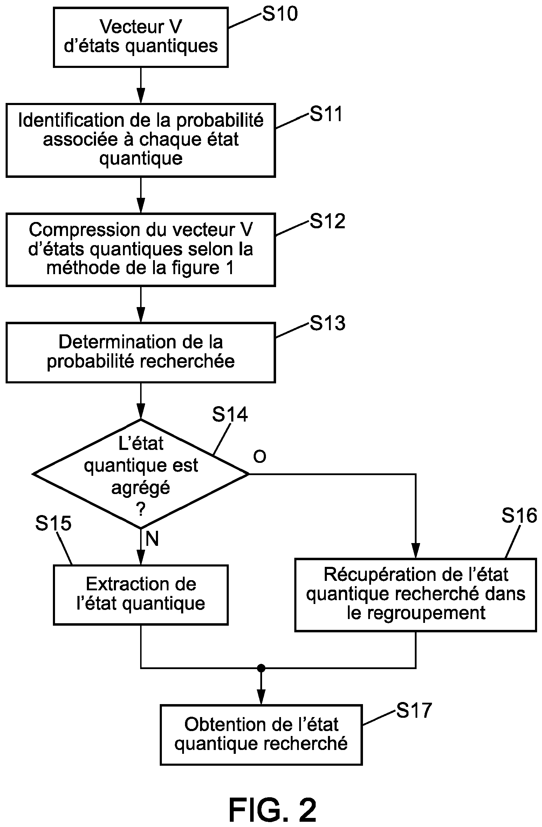

La figure 2 illustre les principales étapes d'une méthode de stockage d'un vecteur d'états quantiques. La méthode de stockage trouve par exemple une application dans l'exécution dans circuit quantique. Lors de cette exécution, le simulateur quantique retourne une valeur du vecteur d'états quantiques. Pour cela, le simulateur quantique peut effectuer un tirage aléatoire dépendant de la probabilité de chaque état quantique. Pour reproduire l'exécution de la simulation, le tirage aléatoire peut être effectué sur l'ensemble des états quantiques. Il s'agit alors de déterminer quel état quantique est associé à la probabilité tiré aléatoirement, tel que décrit ci-après en référence à la figure 2.

A l'étape S10, un vecteur V d'états quantiques est fourni. Le vecteur d'états quantiques est tel que décrit en référence à la figure 1.

A l'étape S11, une identification des probabilités associées à chaque état quantique du vecteur d'états quantiques est effectuée. Plus précisément, la probabilité de chaque état quantique est calculée à partir de l'amplitude de chaque étant quantique.

Le tableau ci-dessous illustre tous les états quantiques d'un vecteur d'états quantiques de 3 qbits.

| Etat | Valeur des qbits | Amplitude | Probabilité |
|---|---|---|---|
| 0 | 000 | 0 | 0 |
| 1 | 001 | 0.25 + 0 i | 0.0625 |
| 2 | 010 | 0 | 0 |
| 3 | 011 | 0.75 + 0 i | 0.5625 |
| 4 | 100 | 0.5 + 0 i | 0.25 |
| 5 | 101 | 0.25 + 0 i | 0.0625 |
| 6 | 110 | 0 | 0 |
| 7 | 111 | 0.25 + 0 i | 0.0625 |

Ainsi, pour un vecteur d'états quantiques comprenant 3 qbits, il existe 8 états quantiques. La somme des probabilités de chaque état quantique est bien égale à 1.

Le vecteur d'états quantiques subi une compression à l'étape S12. La compression du vecteur d'états quantiques est effectuée selon la méthode de compression décrite en référence à la figure 1.

En suivant cette méthode, le premier seuil et/ou le deuxième seuil sont définis comme étant proportionnels au logarithme du nombre d'états quantiques, c'est-à-dire égaux à d.log(8). avec d compris entre 0.1 et 10. On a donc un premier seuil et/ou un deuxième seuil compris entre 0.09 et 1. En effet, le premier seuil et/ou le deuxième seuil ne peuvent être supérieurs à 1, la somme des probabilités étant égale à 1.

Dans l'exemple numérique illustré, on définit le premier seuil et/ou le deuxième seuil comme étant compris entre 0.25 et 0.35.

Ainsi, les états quantiques 0 à 2 peuvent être agrégés en un premier regroupement d'états quantiques. En effet, leurs probabilités respectives sont inférieures au premier seuil. De plus, la somme de leur probabilité est inférieure au deuxième seuil. Le paramètre représentatif de la probabilité de ce regroupement est égal à la somme de la probabilité des états quantiques 0 à 2.

L'état quantique 3 est conservé puisque sa probabilité est supérieure au premier seuil et au deuxième seuil et qu'aucun état quantique contigu n'est associé à la même probabilité.

De la même manière, l'état quantique 4 est conservé.

Les états quantiques 5 à 7 sont agrégés en un regroupement d'états quantiques de la même manière que décrite en référence au regroupement des états quantiques 0 à 2. La probabilité associée à ce regroupement est égale à la somme des probabilités des états quantiques 5 à 7.

Le tableau ci-dessous illustre les états quantiques du vecteur d'états quantiques compressé.

| Etats quantiques | Probabilité |
|---|---|
| 0-2 | 0.0625 |
| 3 | 0.5625 |
| 4 | 0.25 |
| 5-7 | 0.125 |

A l'étape S13, la probabilité recherchée est déterminée. Pour cela, un tirage aléatoire d'une probabilité peut être effectué. Puis, le vecteur d'états quantiques est par exemple parcouru linéairement de manière à déterminer quel est l'état quantique associé à la probabilité recherchée.

Plus précisément, soit x la probabilité tirée aléatoirement. La probabilité x est la probabilité recherchée. Si x est inférieure à 0.0625, l'état quantique associé à la probabilité recherché se trouve dans le regroupement des états quantiques 0 à 2.

Si x est compris entre 0.0625 et 0.625, l'état quantique recherché est l'état quantique 3. En effet, 0.0625 est la fourchette basse puisque la probabilité du premier regroupement est égale à 0.025. D'autre part, 0.625 est la fourchette haute car la probabilité du premier regroupement sommé avec la probabilité de l'état 3 donne 0.625.

Si x est compris entre 0.625 et 0.875, l'état quantique recherché est l'état quantique 4. En effet, 0.625 sommé à la probabilité de l'état quantique 4 donne 0.875.

Enfin, si x est compris entre 0.875 et 1, l'état quantique recherché se trouve dans le regroupement des états quantiques 5 à 7.

Cette détermination est effectuée à l'étape S14.

S'il est déterminé que la probabilité recherchée est associée à un état quantique d'un regroupement d'états quantiques, l'état quantique correspondant est récupéré du regroupement. Plus précisément, l'état quantique est recalculé. Cela peut être effectué au moyen d'une méthode de simulation partielle de type Feynman ou intégrale de chemin. Par « simulation partielle » on entendu une méthode permettant de calculer au moins une partie du vecteur d'état final.

La récupération de l'état quantique d'un regroupement peut être effectuée de différentes façons à l'étape S16.

Par exemple, tous les états quantiques du regroupement peuvent être recalculés, de manière à connaître leur probabilité et déterminer à quel état quantique correspond la probabilité recherchée. Les autres états quantiques des autres regroupements peuvent ne pas être recalculés.

Les états quantiques du regroupement dans lequel se trouve l'état quantique associé à la probabilité recherchée peuvent être successivement recalculés, jusqu'à ce que l'état quantique correspondant soit déterminé. Le reste des états quantiques du regroupement ne sont par exemple pas recalculés.

Dans une autre variante, les états quantiques du regroupement sont tous recalculés en parallèle, puis l'état quantique associé à la probabilité recherchée est déterminé.

Lorsque la probabilité recherchée correspond à un état quantique conservé, c'est-à-dire un état quantique ne se trouvant pas dans un regroupement, l'état quantique est extrait sans nécessiter d'autres calculs, comme illustré à l'étape S15.

L'état quantique recherché est ainsi obtenu à l'étape S17.

Ainsi, le vecteur d'états quantiques, qui comprend habituellement un nombre de qbits très important, et donc un nombre d'états quantiques exponentiellement aussi important, peut être compressé à un taux très important. Les informations compressées, c'est-à-dire les états quantiques regroupés, sont perdues un temps mais peuvent être retrouvées si besoin en fonction de leur probabilité. Les informations perdues sont notamment recalculées au moyen d'une méthode de simulation partielle peu coûteuse en temps d'exécution.

L'état quantique recherché peut notamment être retourné en sortie d'un calculateur quantique.

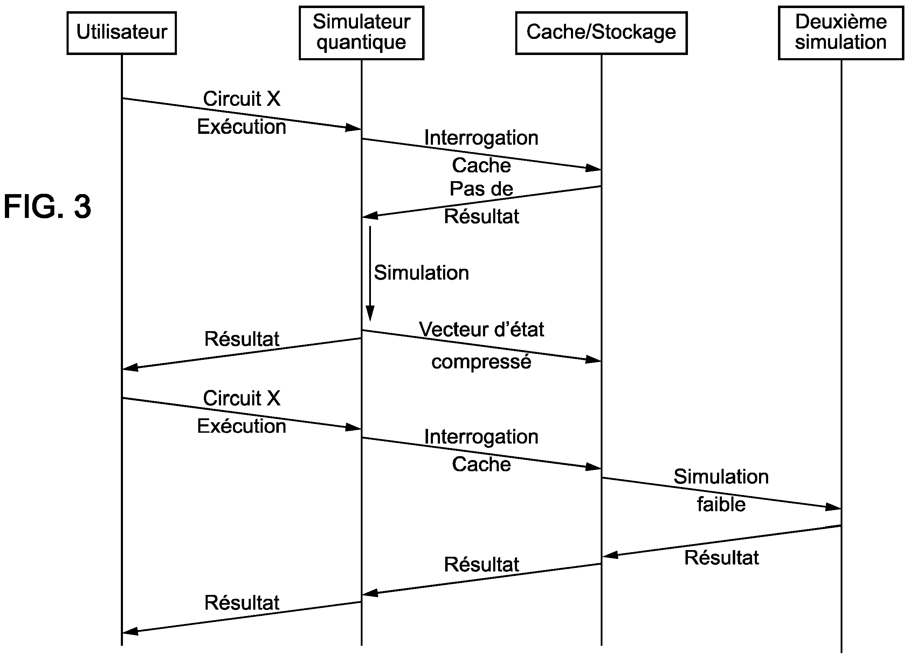

La figure 3 illustre une utilisation de la méthode de stockage et de compression d'un vecteur d'états quantiques selon un exemple de réalisation de l'invention. Plus précisément, la figure 3 illustre le stockage d'un vecteur d'états quantiques compressé au niveau d'un cache en mémoire.

L'utilisateur lance une première exécution du circuit quantique, correspondant à l'obtention du vecteur d'états quantiques des étapes S1 et S10 des figures 1 et 2. L'ordre d'exécution est transmis au simulateur quantique qui interroge le cache ou l'espace de stockage. L'interrogation ne donne pas de résultat puisque c'est la première exécution. Le simulateur quantique effectue alors la simulation, correspondant par exemple à la compression du vecteur d'états quantiques décrite sur la figure 1. Le résultat de cette simulation est transmis à l'utilisateur, par exemple en sortie du circuit quantique. Dans un même temps, le résultat de la simulation, c'est-à-dire le vecteur d'états quantiques compressé est stocké dans le cache ou tout autre espace de stockage.

L'utilisateur relance ensuite une deuxième exécution du circuit quantique. L'ordre d'exécution est transmis au simulateur quantique qui interroge le cache. L'ordre d'exécution est par exemple la recherche d'un état quantique à partir d'une probabilité tirée aléatoirement. Le simulateur quantique interroge le cache qui comprend le vecteur d'états quantiques compressé. Lorsque l'état quantique recherché est un état quantique conservé, le simulateur quantique extrait simplement l'état quantique qui est obtenu par l'utilisateur en sortie du simulateur. Lorsque l'état quantique recherché se trouve dans un regroupement, une deuxième simulation est effectuée, correspondant à une méthode de simulation partielle de type Feynman ou méthode du stabilisateur. L'état quantique recherché est retourné à l'utilisateur.

Le stockage des résultats de la simulation dans un cache permet de limiter les ressources en calcul nécessaire puisque la compression du vecteur d'états quantiques peut n'être effectuée qu'une seule fois, le vecteur d'états quantiques étant ensuite stocké dans le cache.

Les méthodes de stockage d'un vecteur d'états quantiques et/ou de compression d'un vecteur d'états quantiques trouvent d'autres applications.

Par exemple, les méthodes peuvent être utilisées dans des procédés de décodage de clé de cryptographie, l'état quantique recherché correspondant à la clé de cryptographie à décoder.

Les méthodes peuvent également être utilisées pour la recherche d'un élément stocké dans une base de données, selon un ou plusieurs critères de recherche.

## Revendications

1. Méthode de compression d'un vecteur d'états quantiques, comprenant :
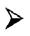 au moins une étape d'agrégation d'un groupe de plusieurs états contigus du vecteur en un regroupement d'états du vecteur,
∘ un paramètre représentatif de la probabilité de ce regroupement lui étant associé et correspondant à la somme des probabilités des états contigus agrégés dans ce regroupement,
∘ la probabilité de chaque état contigu agrégé étant inférieure à un seuil d'agrégation donné, et/ou la somme des probabilités des états contigus agrégés dans un regroupement étant inférieure à un autre seuil d'agrégation donné,
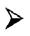 préférentiellement au moins une étape de conservation,
∘ un état du vecteur non agrégé dans un regroupement étant conservé, le paramètre représentatif de sa probabilité restant inchangé,
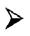 la méthode de compression comprenant :
∘ au moins plusieurs étapes d'agrégation de plusieurs groupes distincts de plusieurs états contigus du vecteur respectivement en plusieurs regroupements d'états du vecteur,
∘ et/ou au moins une étape d'agrégation et au moins une étape de conservation.

2. Méthode de compression d'un vecteur d'états quantiques selon la revendication 1, **caractérisée en ce qu'**elle comprend :
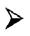 plusieurs étapes d'agrégation de plusieurs groupes distincts de plusieurs états contigus du vecteur respectivement en plusieurs regroupements d'états du vecteur,
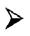 plusieurs étapes de conservation.

3. Méthode de compression d'un vecteur d'états quantiques selon l'une quelconque des revendications précédentes, **caractérisée en ce que** :
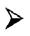 la probabilité de chaque état contigu agrégé étant inférieure à un seuil donné, et la somme des probabilités des états contigus agrégés dans un regroupement étant inférieure à un autre seuil donné,
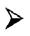 et/ou la probabilité de chaque état conservé étant supérieure à un seuil de conservation donné, et/ou la somme des probabilités des états conservés étant supérieure à un autre seuil de conservation donné,
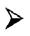 et/ou **caractérisée en ce qu'**elle comprend aussi une étape d'agrégation comprenant le regroupement de plusieurs états quantiques contigus dont toutes les probabilités sont identiques entre elles.

4. Méthode de compression d'un vecteur d'états quantiques selon l'une des revendications 1 à 3, **caractérisée en ce que** :
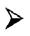 le dit seuil d'agrégation donné et/ou l'autre dit seuil d'agrégation donné sont proportionnels à l'inverse du logarithme du nombre d'états quantiques,
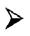 et/ou ledit seuil de conservation donné et/ou ledit autre seuil de conservation donné, est ou sont choisi(s) de manière à ce que le nombre de regroupements soit proportionnel au logarithme du nombre d'états quantiques, avec un coefficient de proportionnalité préférentiellement compris entre 0.1 et 10,
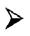 et/ou ledit seuil de conservation donné et/ou ledit autre seuil de conservation donné, est ou sont choisi(s) de manière à ce que le nombre de regroupements reste inférieur à 1000, de préférence inférieur à 100,
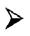 et/ou ledit seuil de conservation donné et/ou ledit autre seuil de conservation donné, est ou sont choisi(s) de manière à ce que le nombre de regroupements reste supérieur à 10.

5. Méthode de compression d'un vecteur d'états quantiques selon l'une quelconque des revendications précédentes, **caractérisée en ce que** :
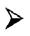 le vecteur comprend au moins 2²⁰ états quantiques, de préférence supérieur à 2²⁵, encore plus de préférence supérieur à 2³⁰, avantageusement supérieur à 2³⁵,
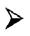 et/ou au moins 90% des états quantiques du vecteur sont agrégés, de préférence au moins 99%, encore plus de préférence au moins 99.9%,
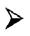 et/ou le ratio du nombre des états agrégés sur le nombre des états non agrégés est supérieur à 2²⁰, de préférence supérieur à 2²⁵, encore plus de préférence supérieur à 2³⁰, avantageusement supérieur à 2³⁵,
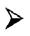 et/ou de préférence, le nombre de vecteurs d'états quantiques, auquel la méthode de compression selon l'une quelconque des revendications précédentes est appliquée, est supérieur à 2²⁰, de préférence supérieur à 2²⁵, encore plus de préférence supérieur à 2³⁰, avantageusement supérieur à 2³⁵.

6. Méthode de compression d'un vecteur d'états quantiques selon l'une quelconque des revendications précédentes, **caractérisée en ce que** :
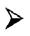 une ou plusieurs étape(s) d'agrégation d'un ou de plusieurs groupe(s) de plusieurs états contigus du vecteur en un ou plusieurs regroupement(s) d'états du vecteur, est ou sont réalisées en affectant, audit regroupement, un paramètre représentatif de la probabilité de ce regroupement correspondant au complémentaire de la somme des probabilités des états préalablement déterminés, c'est-à-dire à la fois des états contigus agrégés et des états conservés.

7. Procédé de stockage d'un vecteur d'états quantiques comprenant :
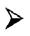 une étape d'identification des différents états du vecteur et des paramètres représentatifs des probabilités qui leur sont respectivement associées,
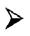 une étape de compression du vecteur utilisant la méthode de compression d'un vecteur d'états quantiques selon l'une quelconque des revendications précédentes,
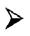 une étape de détermination de la probabilité de l'état quantique recherché,
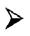 une étape d'association de l'état quantique recherché à la probabilité déterminée,
∘ soit simplement par extraction de l'état quantique recherché correspondant à la probabilité déterminée, lorsque l'état quantique recherché est conservé,
∘ soit par récupération de l'état quantique recherché correspondant à la probabilité déterminée, lorsque l'état quantique recherché est agrégé dans un regroupement, en recalculant cet état quantique recherché agrégé dans ce regroupement.

8. Procédé de stockage d'un vecteur d'états quantiques selon la revendication 7, **caractérisé en ce que** :
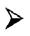 le vecteur d'état quantique recherché est retourné en sortie d'un calculateur quantique.

9. Procédé de stockage d'un vecteur d'états quantiques selon l'une des revendications 7 ou 8, **caractérisé en ce que** :
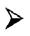 tout ou partie des états quantiques du regroupement contenant ledit état quantique recherché est ou sont recalculé(s),
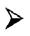 aucun état quantique des autres regroupements ne contenant pas ledit état quantique recherché n'est recalculé.

10. Procédé de stockage d'un vecteur d'états quantiques selon l'une des revendications 7 à 9, **caractérisé en ce que** :
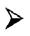 les états quantiques du regroupement contenant ledit état quantique recherché sont successivement recalculés jusqu'à obtenir ledit état quantique recherché,
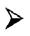 ou les états quantiques du regroupement contenant ledit état quantique recherché sont tous recalculés en parallèle pour obtenir ledit état quantique recherché.

11. Procédé de stockage d'un vecteur d'états quantiques selon l'une des revendications 7 à 10, **caractérisé en ce que** :
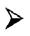 la récupération recalcule cet état quantique recherché agrégé dans ce regroupement par application, à tout ou partie des états quantiques agrégés dans ce regroupement, d'une méthode de simulation partielle,
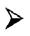 de préférence, la méthode de simulation partielle est une méthode de Feynman, c'est-à-dire par une intégrale de chemin.

12. Procédé de stockage d'un vecteur d'états quantiques comprenant :
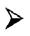 une étape d'identification des différents états du vecteur et des paramètres représentatifs des probabilités qui leur sont respectivement associées,
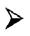 une étape de compression du vecteur utilisant la méthode de compression d'un vecteur d'états quantiques selon l'une quelconque des revendications 1 à 6,
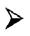 une étape de détermination de la probabilité de l'état quantique recherché,
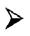 et l'une des deux étapes suivantes :
∘ Soit une étape d'association de l'état quantique recherché à la probabilité déterminée simplement par extraction de l'état quantique recherché correspondant à la probabilité déterminée, lorsque l'état quantique recherché est conservé,
∘ Soit une étape de recalcul de tous les états quantiques dudit vecteur d'états quantiques stocké.

13. Procédé de décodage de clé de cryptographie comprenant une méthode de compression d'un vecteur d'états quantiques selon l'une quelconque des revendications 1 à 6 ou un procédé de stockage d'un vecteur d'états quantiques selon l'une quelconque des revendications 7 à 11.

14. Procédé de recherche dans une base de données, d'un élément stocké dans cette base de données, selon un ou plusieurs critères de recherche dans cette base de données, comprenant une méthode de compression d'un vecteur d'états quantiques selon l'une quelconque des revendications 1 à 6 ou un procédé de stockage d'un vecteur d'états quantiques selon l'une quelconque des revendications 7 à 11.

15. Procédé de détermination de vecteurs d'états quantiques par un processeur quantique dans un ordinateur quantique comprenant une méthode de compression selon l'une quelconque des revendications 1 à 6.

16. Procédé de simulation d'un circuit quantique comprenant une méthode de compression selon l'une quelconque des revendications 1 à 6.

## Patentansprüche

1. Verfahren zum Komprimieren eines Vektors von Quantenzuständen, umfassend:
> wenigstens einen Aggregationsschritt einer Gruppe von mehreren zusammenhängenden Zuständen des Vektors zu einer Gruppierung von Zuständen des Vektors,
∘ einen Parameter, der für die Wahrscheinlichkeit der Zugehörigkeit zu dieser Gruppierung repräsentativ ist und der Summe der Wahrscheinlichkeiten der in dieser Gruppierung aggregierten zusammenhängenden Zustände entspricht,
∘ wobei die Wahrscheinlichkeit jedes zusammenhängenden aggregierten Zustands unter einer gegebenen Aggregationsschwelle liegt, und/oder die Summe der Wahrscheinlichkeiten der zusammenhängenden aggregierten Zustände in einer Gruppierung unter einer anderen gegebenen Aggregationsschwelle liegt,
> bevorzugt wenigstens einen Konservierungsschritt,
∘ wobei ein Zustand des nicht aggregierten Vektors in einer Gruppierung konserviert bleibt, wobei der Parameter, der seine Wahrscheinlichkeit darstellt, unverändert bleibt,
> wobei das Komprimierungsverfahren umfasst:
∘ wenigstens mehrere Schritte der Aggregation mehrerer unterschiedlicher Gruppen von mehreren zusammenhängenden Zuständen des Vektors zu jeweils mehreren Gruppierungen von Zuständen des Vektors,
∘ und/oder wenigstens einen Aggregationsschritt und wenigstens einen Konservierungsschritt.

2. Verfahren zum Komprimieren eines Vektors von Quantenzuständen nach Anspruch 1, **dadurch gekennzeichnet, dass** es umfasst:
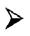 mehrere Schritte der Aggregation mehrerer unterschiedlicher Gruppen von mehreren zusammenhängenden Zuständen des Vektors zu jeweils mehreren Gruppierungen von Zuständen des Vektors,
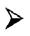 mehrere Konservierungsschritte.

3. Verfahren zum Komprimieren eines Vektors von Quantenzuständen nach einem der vorhergehenden Ansprüche, **dadurch gekennzeichnet, dass**:
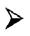 die Wahrscheinlichkeit jedes zusammenhängenden aggregierten Zustands unter einer gegebenen Schwelle liegt, und die Summe der Wahrscheinlichkeiten der zusammenhängenden aggregierten Zustände in einer Gruppierung unter einer anderen gegebenen Schwelle liegt,
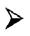 und/oder die Wahrscheinlichkeit jedes konservierten Zustands größer als eine gegebene Konservierungsschwelle ist, und/oder die Summe der Wahrscheinlichkeiten der konservierten Zustände größer als eine andere gegebene Konservierungsschwelle ist,
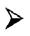 und/oder **dadurch gekennzeichnet, dass** es auch einen Aggregationsschritt umfasst, der die Gruppierung mehrerer zusammenhängender Quantenzustände umfasst, deren Wahrscheinlichkeiten alle zueinander identisch sind.

4. Verfahren zum Komprimieren eines Vektors von Quantenzuständen nach einem der Ansprüche 1 bis 3, **dadurch gekennzeichnet, dass**:
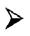 die gegebene Aggregationsschwelle und/oder die andere gegebene Aggregationsschwelle proportional zum Kehrwert des Logarithmus der Anzahl von Quantenzuständen ist,
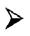 und/oder die gegebene Konservierungsschwelle und/oder die andere gegebene Konservierungsschwelle so gewählt ist/sind, dass die Anzahl der Gruppierungen proportional zum Logarithmus der Anzahl von Quantenzuständen ist, mit einem Proportionalitätskoeffizienten bevorzugt zwischen 0,1 und 10,
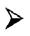 und/oder der gegebene Konservierungsschwellenwert und/oder der gegebene andere Konservierungsschwellenwert so gewählt ist/sind, dass die Anzahl der Gruppierungen unter 1000, bevorzugt unter 100, bleibt,
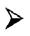 und/oder der gegebene Konservierungsschwellenwert und/oder der gegebene andere Konservierungsschwellenwert so gewählt ist/sind, dass die Anzahl der Gruppierungen über 10 bleibt.

5. Verfahren zum Komprimieren eines Vektors von Quantenzuständen nach einem der vorangehenden Ansprüche, **dadurch gekennzeichnet, dass**:
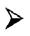 der Vektor wenigstens 2²⁰ Quantenzustände, bevorzugt mehr als 2²⁵, besonders bevorzugt mehr als 2³⁰, vorteilhafterweise mehr als 2³⁵ Quantenzustände umfasst,
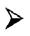 und/oder wenigstens 90 % der Quantenzustände des Vektors aggregiert sind, bevorzugt wenigstens 99 %, stärker bevorzugt wenigstens 99,9 %,
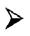 und/oder das Verhältnis der Anzahl der aggregierten Zustände zur Anzahl der nicht aggregierten Zustände größer ist als 2²⁰, bevorzugt größer als 2²⁵, besonders bevorzugt größer als 2³⁰, vorteilhafterweise größer als 2³⁵,
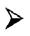 und/oder die Anzahl der Vektoren von Quantenzuständen, auf die das Komprimierungsverfahren nach einem der vorhergehenden Ansprüche angewendet wird, größer ist als 2²⁰, bevorzugt größer als 2²⁵, besonders bevorzugt größer als 2³⁰, vorteilhafterweise größer als 2³⁵.

6. Verfahren zum Komprimieren eines Vektors von Quantenzuständen nach einem der vorhergehenden Ansprüche, **dadurch gekennzeichnet, dass**:
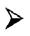 ein oder mehrere Schritte der Aggregation einer oder mehrerer Gruppen von mehreren zusammenhängenden Zuständen des Vektors in eine oder mehrere Gruppierungen von Zuständen des Vektors durchgeführt wird bzw. werden, indem der Gruppierung ein Parameter zugewiesen wird, der für die Wahrscheinlichkeit dieser Gruppierung repräsentativ ist, die dem Komplement der Summe der Wahrscheinlichkeiten der vorher bestimmten Zustände entspricht, d.h. sowohl der zusammenhängenden aggregierten Zustände als auch der konservierten Zustände.

7. Verfahren zum Speichern eines Vektors von Quantenzuständen, umfassend:
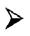 einen Schritt der Identifizierung der verschiedenen Zustände des Vektors und der Parameter, die für die Wahrscheinlichkeiten repräsentativ sind, die jeweils mit ihnen verbunden sind,
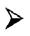 einen Schritt der Komprimierung des Vektors unter Verwendung des Verfahrens zum Komprimieren eines Vektors von Quantenzuständen nach einem der vorhergehenden Ansprüche,
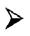 einen Schritt zur Bestimmung der Wahrscheinlichkeit des gesuchten Quantenzustands,
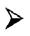 einen Schritt der Assoziation des gesuchten Quantenzustands mit der ermittelten Wahrscheinlichkeit,
∘ entweder einfach durch Extraktion des der ermittelten Wahrscheinlichkeit entsprechenden gesuchten Quantenzustands, wenn der gesuchte Quantenzustand konserviert bleibt.
∘ oder durch Wiederherstellung des der ermittelten Wahrscheinlichkeit entsprechenden gesuchten Quantenzustands, wenn der gesuchte Quantenzustand in einer Gruppierung aggregiert ist, durch Neuberechnung dieses aggregierten gesuchten Quantenzustands in dieser Gruppierung.

8. Verfahren zum Speichern eines Vektors von Quantenzuständen nach Anspruch 7, **dadurch gekennzeichnet, dass**:
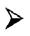 der gesuchte Vektor des Quantenzustands an dem Ausgang eines Quantencomputers zurückgeführt wird.

9. Verfahren zum Speichern eines Vektors von Quantenzuständen nach einem der Ansprüche 7 oder 8, **dadurch gekennzeichnet, dass**:
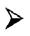 alle oder ein Teil der Quantenzustände der Gruppierung, die den gesuchten Quantenzustand enthält, neu berechnet wird bzw. werden,
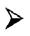 kein Quantenzustand der anderen Gruppierungen, die diesen gesuchten Quantenzustand nicht enthalten, neu berechnet wird.

10. Verfahren zum Speichern eines Vektors von Quantenzuständen nach einem der Ansprüche 7 bis 9, **dadurch gekennzeichnet, dass**:
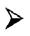 die Quantenzustände der Gruppierung, die den gesuchten Quantenzustand enthält, nacheinander neu berechnet werden, bis der gesuchte Quantenzustand erhalten wird,
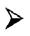 oder die Quantenzustände der Gruppierung, die den gesuchten Quantenzustand enthält, alle parallel neu berechnet werden, um den gesuchten Quantenzustand zu erhalten.

11. Verfahren zum Speichern eines Vektors von Quantenzuständen nach einem der Ansprüche 7 bis 10, **dadurch gekennzeichnet, dass**:
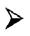 die Wiederherstellung diesen aggregierten gesuchten Quantenzustand in dieser Gruppierung erneut berechnet, indem sie eine partielle Simulationsmethode auf alle oder einige der aggregierten Quantenzustände in dieser Gruppierung anwendet,
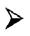 die partielle Simulationsmethode bevorzugt eine Feynman-Methode ist, d.h. mittels eines Pfadintegrals arbeitet.

12. Verfahren zum Speichern eines Vektors von Quantenzuständen, umfassend:
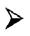 einen Schritt der Identifizierung der verschiedenen Zustände des Vektors und der Parameter, die für die Wahrscheinlichkeiten stehen, die ihnen jeweils zugeordnet sind,
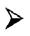 einen Schritt der Komprimierung des Vektors, der das Verfahren zur Komprimierung eines Vektors von Quantenzuständen nach einem der Ansprüche 1 bis 6 verwendet,
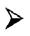 einen Schritt zur Bestimmung der Wahrscheinlichkeit des gesuchten Quantenzustands,
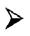 und einen der folgenden beiden Schritte:
∘ entweder einen Schritt der Assoziation des gesuchten Quantenzustands zu der ermittelten Wahrscheinlichkeit durch einfaches Extrahieren des der ermittelten Wahrscheinlichkeit entsprechenden gesuchten Quantenzustands, wenn der gesuchte Quantenzustand erhalten bleibt,
∘ oder einen Schritt der Neuberechnung aller Quantenzustände des Vektors der gespeicherten Quantenzustände.

13. Verfahren zum Dekodieren eines kryptographischen Schlüssels, umfassend ein Verfahren zum Komprimieren eines Vektors von Quantenzuständen nach einem der Ansprüche 1 bis 6 oder ein Verfahren zum Speichern eines Vektors von Quantenzuständen nach einem der Ansprüche 7 bis 11.

14. Verfahren zum Durchsuchen einer Datenbank nach einem darin gespeicherten Element gemäß einem oder mehreren Suchkriterien in der Datenbank, umfassend ein Verfahren zum Komprimieren eines Vektors von Quantenzuständen nach einem der Ansprüche 1 bis 6 oder ein Verfahren zum Speichern eines Vektors von Quantenzuständen nach einem der Ansprüche 7 bis 11.

15. Verfahren zur Bestimmung von Vektoren von Quantenzuständen durch einen Quantenprozessor in einem Quantencomputer, umfassend ein Verfahren zur Komprimierung nach einem der Ansprüche 1 bis 6.

16. Verfahren zur Simulation einer Quantenschaltung mit einem Komprimierungsverfahren nach einem der Ansprüche 1 bis 6.

## Claims

1. A method for compressing a quantum state vector, comprising:
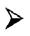 at least one step of aggregating a group of several neighboring states of the vector into a cluster of states of the vector,
∘ a parameter representative of the probability of this cluster being associated with it and corresponding to the sum of the probabilities of the aggregated neighboring states in this cluster,
∘ the probability of each aggregated neighboring state being below a given aggregation threshold, and/or the sum of the probabilities of the aggregated neighboring states in a cluster being below another given aggregation threshold,
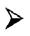 preferably at least one preservation step, ∘ a state of the vector not aggregated in a cluster being preserved, the parameter representative of its probability remaining unchanged,
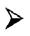 the compression method comprising:
∘ at least several steps of aggregating several distinct groups of several neighboring states of the vector, respectively into several clusters of states of the vector,
∘ and/or at least one aggregation step and at least one preservation step.

2. The method for compressing a quantum state vector according to claim 1, comprising:
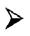 several steps of aggregating several distinct groups of several neighboring states of the vector, respectively into several clusters of states of the vector,
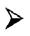 several preservation steps.

3. The method for compressing a quantum state vector according to claim 1 or 2, wherein:
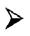 the probability of each aggregated neighboring state is below a given threshold, and the sum of the probabilities of the aggregated neighboring states in a cluster is below another given threshold,
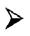 And/or the probability of each preserved state is above a given preservation threshold, and/or the sum of the probabilities of the preserved states is above another given preservation threshold,
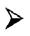 And/or wherein it also comprises an aggregation step comprising the grouping of several neighboring quantum states for which the probabilities are all identical.

4. The method for compressing a quantum state vector according to any of claims 1 to 3, wherein:
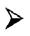 said given aggregation threshold and/or said other given aggregation threshold are proportional to the inverse of the logarithm of the number of quantum states,
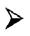 and/or said given preservation threshold and/or said other given preservation threshold is or are chosen so that the number of clusters is proportional to the logarithm of the number of quantum states, with a coefficient of proportionality preferably comprised between 0.1 and 10,
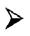 and/or said given preservation threshold and/or said other given preservation threshold is or are chosen so that the number of clusters remains less than 1000, preferably less than 100,
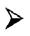 and/or said given preservation threshold and/or said other given preservation threshold is or are chosen so that the number of clusters remains greater than 10.

5. The method for compressing a quantum state vector according to any of claims 1 to 4, wherein:
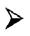 the vector comprises at least 2²⁰ quantum states, preferably more than 2²⁵, still more preferably more than 2³⁰, advantageously more than 2³⁵,
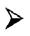 and/or at least 90% of the quantum states of the vector are aggregated, preferably at least 99%, more preferably at least 99.9%.,
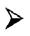 and/or the ratio of the number of aggregated states to the number of nonaggregated states is greater than 2²⁰, preferably greater than 2²⁵, still more preferably greater than 2³⁰, advantageously greater than 2³⁵,
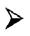 and/or preferably, the number of quantum state vectors to which the compression method according to any one of the preceding claims is applied, is greater than 2²⁰, preferably greater than 2²⁵, still more preferably greater than 2³⁰, advantageously greater than 2³⁵.

6. The method for compressing a quantum state vector according to any of claims 1 to 5, wherein:
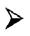 one or more steps of aggregating one or more groups of several neighboring states of the vector into one or more clusters of states of the vector, is or are performed by assigning, to said cluster, a parameter representative of the probability of this cluster corresponding to the complement of the sum of the probabilities of the states previously determined, meaning both the aggregated continuous states and the preserved states.

7. A process for storing a quantum state vector, comprising:
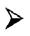 a step of identifying the different states of the vector and the parameters representative of the probabilities respectively associated with them,
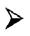 a step of compressing the vector, using the method for compressing a quantum state vector according to claim 1,
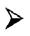 a step of determining the probability of the desired quantum state,
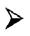 a step of associating the desired quantum state with the determined probability,
∘ either simply by extracting the desired quantum state corresponding to the determined probability, when the desired quantum state is preserved,
∘ or by recovering the desired quantum state corresponding to the determined probability, when the desired quantum state is aggregated in a cluster, by recalculating this desired quantum state aggregated in this cluster.

8. The process for storing a quantum state vector according to claim 7, wherein:
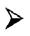 the desired quantum state vector is returned as output from a quantum computer.

9. The process for storing a quantum state vector according to any of claims 7 or 8, wherein:
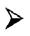 all or part of the quantum states of the cluster containing said desired quantum state is or are recalculated,
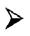 no quantum state of the other clusters which do not contain said desired quantum state is recalculated.

10. The process for storing a quantum state vector according to any of claims 7 to 9, wherein:
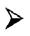 the quantum states of the cluster containing said desired quantum state are successively recalculated until said desired quantum state is obtained,
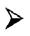 or the quantum states of the cluster containing said desired quantum state are all recalculated in parallel in order to obtain said desired quantum state.

11. The process for storing a quantum state vector according to any of claims 7 to 10, wherein:
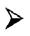 the recovery recalculates this desired quantum state aggregated in this cluster by applying a partial simulation method to all or part of the quantum states aggregated in this cluster,
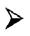 preferably, a Feynman method, in other words via a path integral.

12. A process for storing a quantum state vector, comprising:
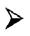 a step of identifying the different states of the vector and the parameters representative of the probabilities respectively associated with them,
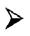 a step of compressing the vector using the method for compressing a quantum state vector according to claim 1,
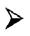 a step of determining the probability of the desired quantum state,
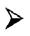 and one of the following two steps:
∘ either a step of associating the desired quantum state with the determined probability, simply by extracting the desired quantum state corresponding to the determined probability, when the desired quantum state is preserved,
∘ or a step of recalculating all the quantum states of said stored quantum state vector.

13. Process for decoding a cryptographic key, comprising a method for compressing a quantum state vector according to any of claims 1 to 6 or a process for storing a quantum state vector according to any of claims 7 to 11.

14. Process for searching a database for an item stored in this database, according to one or more search criteria for this database, comprising a method for compressing a quantum state vector according to the invention or a process for storing a quantum state vector according to any of claims 1 to 6.

15. Process for the determination of quantum state vectors by a quantum processor in a quantum computer, comprising a compression method according to any of claims 1 to 6.

16. Process for simulating a quantum circuit, comprising a compression method according to any of claims 1 to 6.
